(19) **Europäisches Patentamt**
**European Patent Office**
**Office européen des brevets**

(11) **EP 3 623 151 B1**

(12) **EUROPEAN PATENT SPECIFICATION**

(45) Date of publication and mention
of the grant of the patent:
**18.05.2022 Bulletin 2022/20**

(21) Application number: **18798034.7**

(22) Date of filing: **09.05.2018**

(51) International Patent Classification (IPC):
**B32B 23/08** (2006.01)    **C09J 7/35** (2018.01)
**G02B 5/30** (2006.01)    **B32B 25/04** (2006.01)
**B32B 25/06** (2006.01)    **B32B 25/08** (2006.01)
**B32B 27/08** (2006.01)    **B32B 27/10** (2006.01)
**D21H 19/24** (2006.01)    **B32B 9/04** (2006.01)

(52) Cooperative Patent Classification (CPC):
**D21H 19/24; B32B 13/12; B32B 15/088;
B32B 15/09; B32B 15/095; B32B 15/18;
B32B 15/20; B32B 17/08; B32B 23/042;
B32B 23/08; B32B 23/16; B32B 23/20;
B32B 23/22; B32B 27/08; B32B 27/302;**    (Cont.)

(86) International application number:
**PCT/JP2018/018003**

(87) International publication number:
**WO 2018/207845 (15.11.2018 Gazette 2018/46)**

(54) **SHEET, METHOD FOR PRODUCING SHEET AND BONDING METHOD**

FOLIE, VERFAHREN ZUR HERSTELLUNG EINER FOLIE UND VERBINDUNGSVERFAHREN

FEUILLE, PROCÉDÉ DE PRODUCTION DE FEUILLE ET PROCÉDÉ DE COLLAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.05.2017 JP 2017095466**

(43) Date of publication of application:
**18.03.2020 Bulletin 2020/12**

(73) Proprietor: **Daicel Corporation**
**Osaka-shi, Osaka 530-0011 (JP)**

(72) Inventors:
• **HASHIZUME, Tomohiro**
**Tokyo 108-8230 (JP)**
• **SHIGEMATSU, Masato**
**Tokyo 108-8230 (JP)**
• **TAKANO, Yugo**
**Tokyo 108-8230 (JP)**

(74) Representative: **Grünecker Patent- und
Rechtsanwälte
PartG mbB
Leopoldstraße 4
80802 München (DE)**

(56) References cited:
**WO-A1-2011/083809**    **JP-A- H0 959 577**
**JP-A- 2008 012 675**    **JP-A- 2014 125 567**
**JP-A- 2015 203 064**    **US-A1- 2014 170 359**

**EP 3 623 151 B1**

(52) Cooperative Patent Classification (CPC): (Cont.)
**B32B 27/304; B32B 27/306; B32B 27/308;**
**B32B 27/325; B32B 27/34; B32B 27/36;**
**B32B 27/40; C09J 7/35; G02B 5/30;** B32B 2250/02;
B32B 2274/00; B32B 2307/412; B32B 2307/51;
B32B 2307/732; B32B 2307/748; B32B 2439/70;
B32B 2457/202

## Description

### Technical Field

The present invention relates to a sheet, a method for producing the sheet, and a method for laminating the sheet.

### Background Art

Cellulose-based materials, particularly cellulose acetate, have been mainly used as materials for protective films for protecting polarizers in liquid crystal displays. As methods for laminating to a polarizer a protective film which is a cellulose-based film formed of a cellulose-based material, a number of methods have been heretofore known. In one of the methods, ester groups on a surface portion of a cellulose-based film are saponified by alkali treatment to form OH groups, and the film is then laminated to a polarizer with a water-based adhesive interposed therebetween. In another method, a cellulose-based film is coated with a monomer composition that undergoes polymerization reaction when irradiated with UV light, and a polarizer is brought into close contact with the coated surface of the film. Then, UV light is applied to laminate the film to the polarizer. In yet another method, a sheet-shaped pressure sensitive adhesive (also called PSA) is stacked between a cellulose-based film and a polarizer, and pressure is applied to laminate the film to the polarizer.
PTL 5 discloses a cover layer for a panel which has a panel base body, comprising a paper layer and a film layer of elastic plastic which forms an outer side of the cover layer, wherein the paper layer is a preimpregnate which has been partially impregnated either before, during or after paper manufacture.

### Citation List

### Patent Literature

PTL 1: Japanese Patent Laid-Open Publication No. 2004-109657
PTL 2: Japanese Patent Laid-Open Publication No. 2002-082226
PTL3: Japanese Patent Laid-Open Publication No. 2016-173581
PTL4: Japanese Patent Laid-Open Publication No. 2016-048361
PTL 5: US 2014/170359 A1

### Summary of Invention

### Technical Problem

For one of the conventional methods in which a surface of a cellulose-based film is saponified by alkali treatment, and the film is then laminated to a polarizer using a water-based adhesive, it is difficult to handle the film in a flat state due to occurrence of a phenomenon in which the saponification treatment of the film surface causes the film to curl even when the saponification time is appropriately adjusted. Further, drying of the water-based adhesive progresses as moisture of the water-based adhesive passes through the cellulose-based film, and therefore the drying requires a long period of time.

Next, for the method in which a cellulose-based material is coated with a monomer composition that undergoes polymerization reaction when irradiated with UV light, and UV light is applied to laminate the cellulose-based material to a polarizer, it is necessary to perform liquid preparation, storage and coating while shielding the monomer composition from light, and adhesion failure occurs when a shielding condition during storage and coating is insufficient.

For the method in which a pressure sensitive adhesive is used, the possibility is not low that at the time when a counterpart material to be laminated to a cellulose-based film is accurately aligned, part of the film accidentally comes into contact with the counterpart material due to curvature of the film or the like, and the film is partially adhered to the counterpart material. In the case where the film is partially adhered to the counterpart material, the adhesive may remain or the cellulose-based film or the counterpart material may be broken even when they are peeled again. For solving the problems in the conventional methods, bringing a cellulose-based film into close contact with a counterpart material such as a polarizer, followed by applying heat to adhere the film to the counterpart material was considered.

An object of the present invention is to provide a cellulose-based sheet which has excellent transparency, and exhibits excellent adhesiveness when thermally press-adhered.

**Solution to Problem**

A first aspect of the present invention relates to a sheet including a laminate including a layer formed of a cellulose-based material and a layer formed of a thermoplastic elastomer. Each of molecules forming the thermoplastic elastomer has both a rubber component having entropy elasticity and a molecule-constraining component for preventing plastic deformation. The cellulose-based material is selected from the group consisting of cellulose, cellulose esters and cellulose ethers. The thermoplastic elastomer is a urethane-based elastomer or an amide-based elastomer. The light transmittance of the sheet is 85% or more as determined with a transmittance of light having a wavelength of380 to 780 nm measured using a UV-visible spectrophotometer, and defining the average of transmittances at every 0.5 nm as the light transmittance (%).

Preferably, the sheet includes a laminate of two layers, one of which is the layer formed of the cellulose-based material and the other of which is the layer formed of the thermoplastic elastomer.

Preferably, the cellulose-based material in the sheet contains at least one selected from the group consisting of cellulose acetate, cellulose acetate propionate, cellulose acetate butyrate, methyl cellulose, ethyl cellulose and hydroxyethyl cellulose.

A second aspect of the present invention relates to a method for producing the sheet, the method including the steps of: casting a solution of a cellulose-based material; drying the cast cellulose-based material; and casting a solution of a thermoplastic elastomer onto the cast cellulose-based material after the drying.

A third aspect of the present invention relates to a method for producing the sheet, the method including the step of obtaining a layer formed of a cellulose-based material by a solvent-casting method in which a solution of the cellulose-based material is cast and dried; or by a melt-casting method in which the cellulose-based material is heated, and a melt is cast and cooled; and coating a surface of the layer formed of a cellulose-based material with a melt or a solution of a thermoplastic elastomer.

A fourth aspect of the present invention relates to a method for producing the sheet, the method including the steps of: superposing a layer formed of a cellulose-based material and a layer formed of a thermoplastic elastomer on each other; and thermally press-adhering the layer formed of the cellulose-based material and the layer formed of the thermoplastic elastomer.

A fifth aspect of the present invention relates to a method for producing a sheet, the method including the step of further stacking a resin film on a surface of the layer formed of the thermoplastic elastomer in the above-defined sheet, and thermally press-adhering the film.

A sixth aspect of the present invention relates to a method for laminating the sheet, including thermally press-adhering a surface of the layer formed of the thermoplastic elastomer to an adherend.

**Advantageous Effects of Invention**

In accordance with the present invention, it is possible to provide a cellulose-based sheet which has excellent transparency, and exhibits excellent adhesiveness when thermally press-adhered.

**Description of Embodiments**

[Sheet]

The sheet of the present disclosure includes a laminate including a layer formed of a cellulose-based material and a layer formed of a thermoplastic elastomer. Further, the sheet optionally includes another layer between the layer formed of the cellulose-based material and the layer formed of the thermoplastic elastomer. The cellulose-based material is selected from the group consisting of cellulose, cellulose esters and cellulose ethers. The thermoplastic elastomer is a urethane-based elastomer or an amide-based elastomer. The light transmittance of the sheet is 85% or more as determined with a transmittance of light having a wavelength of 380 to 780 nm measured using a UV-visible spectrophotometer, and defining the average of transmittances at every 0.5 nm as the light transmittance (%).

The sheet of the present disclosure can be adhered to a counterpart material without saponifying the sheet, without applying an adhesive and without securing a sufficient drying time for removing moisture contained in the adhesive after applying the adhesive. Further, the sheet can be adhered to a counterpart material without using a UV adhesive which is sensitive to external stimuli such as heat and light, so that abnormal adhesion may occur. Further, since the sheet of the present disclosure has excellent adhesiveness when thermally press-adhered, a counterpart material to be laminated can be brought into close contact with the sheet, and aligned.

Preferably, the sheet of the present disclosure includes a laminate of two layers, one of which is a layer formed of a cellulose-based material and the other of which is a layer formed of a thermoplastic elastomer. This ensures that the sheet has excellent transparency, and exhibits excellent adhesiveness when thermally press-adhered.

As for the transparency of the sheet of the present disclosure, when the sheet is used as a protective film for a polarizer in a liquid crystal display, the light transmittance is 85% or more, preferably 90% or more because a sufficient amount of transmitted light can be secured in the liquid crystal display. The light transmittance is most preferably 100%, but may be 95% or less because reduction of the transmittance by a difference in refractive index between the cellulose-based material and air cannot be avoided. Here, the light transmittance is an average value of transmittances of light having a wavelength of 380 to 780 nm.

Further, the elastic modulus of the sheet of the present disclosure is preferably 0.5 GPa or more and 5.0 GPa or less, more preferably 1.0 GPa or more and 4.0 GPa or less, still more preferably 1.0 GPa or more and 3.5 GPa or less. When the elastic modulus is excessively low, the sheet cannot maintain sufficient strength, and the sheet is easily stretched and shrunk with an external force, and when the elastic modulus is excessively high, the sheet has poor handleability in laminating of the sheet to a counterpart material. The elastic modulus is determined by a method conforming to JIS K 7127.

[Layer formed of cellulose-based material]

A layer formed of a cellulose-based material refers to a layer containing the cellulose-based material as a main component. The layer formed of the cellulose-based material may contain additives and the like in addition to the cellulose-based material. Here, the main component refers to a component, the content of which is 50% by weight or more based on the weight of the layer formed of the cellulose-based material.

In the layer formed of the cellulose-based material, the content of the cellulose-based material is preferably 50% by weight or more, more preferably 65% by weight or more, still more preferably 75% by weight or more, most preferably 85% by weight or more. The upper limit of the content of the cellulose-based material is not particularly limited, and may be 100% by weight or less.

The cellulose-based material is selected from the group consisting of cellulose, cellulose esters and cellulose ethers.

Examples of the cellulose include cotton, pulp, bacterial cellulose and regenerated cellulose. Further, these celluloses may be processed into a sheet shape, or processed into powdered cellulose or microcrystalline cellulose.

Examples of the cellulose processed into a sheet shape include cotton dispersed in water, paper obtained by forming pulp, bacterial cellulose or the like into a sheet, and cellophane obtained by processing regenerated cellulose into a sheet shape. The paper also includes one obtained by forming nanocellulose into a sheet.

The cellulose ester is not particularly limited, and may be an aliphatic organic acid ester or an aromatic organic acid ester. Examples of the aliphatic organic acid ester include C1-24 organic acid esters, and more specific examples thereof include cellulose acetates such as cellulose diacetate and cellulose triacetate; cellulose propionate; cellulose butyrate; cellulose acetate propionate and cellulose acetate butyrate. Examples of the aromatic organic acid ester include C7-12 aromatic carboxylic acid esters, and more specific examples thereof include cellulose phthalate and cellulose benzoate.

The cellulose ether is not particularly limited. Examples of the cellulose ether include methyl cellulose, ethyl cellulose, carboxymethyl cellulose, hydroxyethyl cellulose and hydroxypropyl cellulose.

Further, the cellulose-based material may be a combination of at least two selected from aliphatic organic acid esters, aromatic organic acid esters and cellulose ethers, and examples thereof include cellulose acetate benzoate, cellulose propionate benzoate, methyl cellulose acetate, methyl cellulose benzoate, ethyl cellulose acetate, ethyl cellulose benzoate, hydroxyethyl cellulose acetate and hydroxyethyl cellulose benzoate.

The cellulose esters and cellulose ethers may be processed into a sheet shape. Examples of the method for processing these cellulose-based materials into a sheet shape include: a solvent casting method in which a cellulose ester and/or a cellulose ether are dissolved in a solvent capable of dissolving the cellulose ester and/or the cellulose ether, and the solution is cast, and then dried; and a melt film formation method in which a cellulose ester and/or a cellulose ether are heated and melted, and pressed or extruded from a T-die.

Preferably, the cellulose-based material contains at least one selected from the group consisting of cellulose acetate, cellulose acetate propionate, cellulose acetate butyrate, methyl cellulose, ethyl cellulose and hydroxyethyl cellulose. This ensures that the resulting sheet has particularly excellent transparency.

When cellulose acetate is used as the cellulose-based material, the degree of acetyl substitution thereof is preferably 1.50 or more and 2.96 or less. This ensures that the resulting sheet has particularly excellent transparency. The degree of acetyl substitution is obtained by determining the acetylation degree in accordance with the method for measuring an acetylation degree in ASTM:D-817-91 (Method for Testing Cellulose Acetate and Others), and converting the acetylation degree in accordance with the following equation. This is the most common method for determining the substitution degree of cellulose acetate.

$$DS = 162.14 \times AV \times 0.01/(60.052 - 42.037 \times AV \times 0.01)$$

DS: degree of acetyl substitution
AV: acetylation degree (%)

When the layer formed of the cellulose-based material contains additives, known additives can be used. Examples of the known additives include ultraviolet light absorbers, light stabilizers, antioxidants, plasticizers, heat stabilizers, optical property modifiers, optical brighteners and flame retardants.

The thickness of the layer formed of the cellulose-based material is preferably 2 μm or more and 500 μm or less, more preferably 15 μm or more and 150 μm or less, still more preferably 15 μm or more and 100 μm or less. By setting the thickness within these ranges, a sheet having a further improved elastic modulus can be obtained.

[Layer formed of thermoplastic elastomer]

A layer formed of a thermoplastic elastomer refers to a layer which contains the thermoplastic elastomer as a main component. The layer formed of the thermoplastic elastomer may contain additives and the like in addition to the thermoplastic elastomer. Here, the main component refers to a component, the content of which is 50% by weight or more based on the weight of the layer formed of the thermoplastic elastomer.

Each of the molecules forming the thermoplastic elastomer has both a rubber component having entropy elasticity and a molecule-constraining component for preventing plastic deformation. In particular, examples of the thermoplastic elastomer include copolymers including a soft segment and a hard segment in each molecule where the soft segment is the rubber component having entropy elasticity, and the hard segment is the molecule-constraining component for preventing plastic deformation.

Examples of the thermoplastic elastomer include butadiene-based elastomers, styrene-based elastomers, urethane-based elastomers, ester-based elastomers and amide-based elastomers.

Examples of the butadiene-based elastomer include copolymers in which the hard segment includes polybutadiene and the soft segment includes poly ether or polyester; and polymers in which both the hard segment and the soft segment include polybutadiene, and functions as an elastomer are imparted by adjusting the degree of crystallinity.

Examples of the styrene-based elastomer include copolymers in which the hard segment includes polystyrene, and the soft segment includes polybutadiene, polyisoprene or a hydrogenated product thereof. In particular, when the soft segment is polybutadiene, the elastomer is referred to as a styrene butadiene-based elastomer.

Examples of the urethane-based elastomer include copolymers in which the hard segment includes a urethane structure, and the soft segment includes polyester or poly ether.

Examples of the ester-based elastomer include copolymers in which the hard segment includes polyester, and the soft segment includes polyether or polyester.

Examples of the amide-based elastomer include copolymers in which the hard segment includes polyamide, and the soft segment includes polyether or polyester.

Further, it is preferable that the thermoplastic elastomer meets all of the following requirements 1) to 5): 1) a copolymer containing two or more monomers; 2) a copolymer having at least three blocks of hard segment-soft segment-hard segment; 3) the glass transition temperature of the hard segment is different from the glass transition temperature of the soft segment, and the glass transition temperature of the hard segment is higher than the glass transition temperature of the soft segment; 4) the glass transition temperature of the soft segment is lower than 25°C; and 5) the glass transition temperature of the hard segment is 80°C or higher.

The glass transition temperature of the hard segment is preferably 80°C or higher, more preferably 100°C or higher, still more preferably 120°C or higher. When the glass transition temperature is lower than 80°C, the layer formed of the thermoplastic elastomer in the sheet exhibits tackiness (adhesion ability) before thermal press-adhering is performed. The upper limit of the glass transition temperature is not particularly limited, and may be, for example, 160°C or lower.

The glass transition temperature of the soft segment is preferably lower than 25°C, and more preferably lower than 10°C, still more preferably lower than 0°C because the adhesiveness of the sheet is further improved. When the glass transition temperature is 25°C or higher, the tackiness (adhesion ability) of the sheet after thermal press-adhering is performed is insufficient.

The thickness of the layer formed of the thermoplastic elastomer is preferably 2 μm or more and 500 μm or less, more preferably 15 μm or more and 150 μm or less, still more preferably 15 μm or more and 50 μm or less. By setting the thickness within these ranges, a sheet having further improved adhesiveness can be obtained.

6

[Production of sheet (casting)]

A first method for producing the sheet of the present disclosure includes the steps of: casting a solution of a cellulose-based material; drying the cast cellulose-based material; and casting a solution of a thermoplastic elastomer onto the cast cellulose-based material after the drying.

(Solution of cellulose-based material)

The solution of the cellulose-based material is a dope obtained by dissolving or dispersing a cellulose-based material in a solvent. In addition to the cellulose-based material and the solvent, the solution may contain other additives such as a plasticizer if necessary.

The solvent is not particularly limited as long as it is a solvent in which the cellulose-based material, additives and the like are simultaneously dissolved or dispersed. Examples of the solvent include chlorine-based organic solvents such as dichloromethane; and non-chlorine-based organic solvents such as methyl acetate, ethyl acetate, amyl acetate, acetone, tetrahydrofuran, 1,3-dioxolane, 1,4-dioxane, cyclohexanone, ethyl formate, dimethyl sulfoxide, N,N-dimethylacetamide, N,N-dimethylformamide, sulfolane, N-methylpyrrolidone, 1,3-dimethyl-2-imidazolidinone, 2,2,2-trifluoroethanol, 2,2,3,3-hexafluoro-1-propanol, 1,3-difluoro-2-propanol, 1,1,1,3,3,3-hexafluoro-2-methyl-2-propanol, 1,1,1,3,3,3-hexafluoro-2-propanol, 2,2,3,3,3-pentafluoro-1-propanol and nitroethane.

Preferably, the solution of the cellulose-based material contains, in addition to the organic solvent, a linear or branched aliphatic alcohol having 1 to 4 carbon atoms in such a manner that the content of the aliphatic alcohol is 1 to 40% by weight based on the amount of the solvent. When the solution contains an alcohol, a film-shaped material turns into a gel, and is easily peeled off from a support.

Examples of the linear or branched aliphatic alcohol having 1 to 4 carbon atoms include methanol, ethanol, n-propanol, iso-propanol, n-butanol, sec-butanol and tert-butanol. Among them, methanol is preferable because the solution becomes stable, and an excellent drying property is exhibited.

The amount of the cellulose-based material in the solution of the cellulose-based material is preferably 10 to 40% by weight, more preferably 10 to 30% by weight based on the amount of the resulting solution.

(Casting of solution of cellulose-based material)

The solution of the cellulose-based material is cast to a casting position on the support using a coat hanger die and a pressure die such as a T-die; an applicator; or the like. The support is preferably a glass or metal support.

(Drying of cellulose-based material)

By drying of the cast cellulose-based material, the solvent in the solution of the cellulose-based material, which is cast onto the support, is evaporated on the support. Examples of the method for evaporating the solvent include: a method in which air is applied from the liquid level side of the solution of the cellulose-based material; a method in which the back surface of the support is heated with a liquid as a medium; a method in which heat is transferred from the front and the back by radiant heat; and a method in which the solution is left standing in the air. Further, these methods may be used in combination.

The method for evaporating the solvent on the support is preferably a method in which the solution is left standing in the air because smoothness of the sheet surface is easily obtained. It is more preferable to dry the solution in an atmosphere at 10 to 30°C.

It is preferable to evaporate the solvent in such a manner that the solvent is not completely evaporated, specifically in such a manner that for example, the concentration of the cellulose-based material is within the range of 40% by weight or more and 80% by weight or less. This is because that when another layer is formed on the layer formed of the cellulose-based material, the layer formed of the cellulose-based material exhibits excellent adhesiveness with the other layer, and a sheet excellent in elasticity is obtained.

(Solution of thermoplastic elastomer)

The solution of the thermoplastic elastomer is obtained by dissolving the thermoplastic elastomer in a solvent. In addition to the thermoplastic elastomer and the solvent, the solution may contain other additives such as a plasticizer if necessary.

As the solvent, one identical to the solvent in the solution of the cellulose-based material can be used. In the step of casting the solution of the thermoplastic elastomer onto the cast cellulose-based material, it is preferable to use a solvent having a composition identical to that of the solvent used in the step of casting the cellulose-based material.

The amount of the thermoplastic elastomer in the solution of the thermoplastic elastomer is preferably 10 to 40% by weight, more preferably 10 to 30% by weight based on the amount of the resulting solution.

(Casting of solution of thermoplastic elastomer)

The solution of the thermoplastic elastomer is cast onto the cast cellulose-based material using a coat hanger die and a pressure die such as a T-die; an applicator; or the like.

(Drying of laminate)

In drying of a laminate obtained by casting the solution of the thermoplastic elastomer onto the cast cellulose-based material, it is preferable that the solvent of the laminate is evaporated on the support, and the laminate is then peeled off from the support, and further dried.

As with the case of drying of the cast cellulose-based material, examples of the method for evaporating the solvent on the support include: a method in which air is applied from the liquid level side of the solution of the thermoplastic elastomer; a method in which the back surface of the support is heated with a liquid as a medium; a method in which heat is transferred from the front and the back by radiant heat; and a method in which the solution is left standing in the air. These methods may be used in combination.

The method for evaporating the solvent on the support is preferably a method in which the solution is left standing in the air because smoothness of the sheet surface is easily obtained. It is more preferable to dry the solution in an atmosphere at 10 to 30°C.

Examples of the method for peeling off the laminate from the support and drying the laminate include: a method in which air is applied from the liquid level side of the solution of the thermoplastic elastomer; a method in which heat is transferred from the front and the back by radiant heat; and a method in which the solution is left standing in the air. These methods may be used in combination.

[Production of sheet (coating)]

A second method for producing the sheet of the present disclosure includes the step of coating a surface of a layer formed of a cellulose-based material with a melt or a solution of a thermoplastic elastomer.

(Layer formed of cellulose-based material)

The layer formed of the cellulose-based material can be obtained by a solvent-casting method in which a solution of the cellulose-based material is cast and dried; or a melt-casting method in which the cellulose-based material is heated, and a melt is cast and cooled. The layer may contain, in addition to the cellulose-based material, other additives such as a plasticizer if necessary.

(Melt of thermoplastic elastomer)

The melt of the thermoplastic elastomer is obtained by applying heat with a temperature equal to or above the melting point of the thermoplastic elastomer. In addition to the thermoplastic elastomer, the melt may contain other additives such as a plasticizer if necessary.

(Solution of thermoplastic elastomer)

The solution of the thermoplastic elastomer is a dope obtained by dissolving or dispersing the thermoplastic elastomer in a solvent as described above. In addition to the thermoplastic elastomer and the solvent, the solution may contain other additives such as a plasticizer if necessary.

The amount of the thermoplastic elastomer in the solution of the thermoplastic elastomer is preferably 5 to 40% by weight, more preferably 8 to 30% by weight based on the amount of the resulting solution.

(Coating)

As a method for coating a surface of a layer formed of a cellulose-based material with a melt or a solution of a thermoplastic elastomer, a conventional method can be used. Examples of the method include a coater method (pressure dies such as a coat hanger die and a T-die, an applicator, a bar coater and the like can be used), a dipping method, a spraying method and a spinner method.

(Cooling of laminate)

When a surface of the layer formed of the cellulose-based material is coated with a melt of a thermoplastic elastomer, the melt is cooled on the support. The method for cooling the melt is not particularly limited. For example, the melt may be left standing in the air, or a water cooling method for cooling the melt by cooling water or the like, or an air cooling method for cooling the melt using cooling air may be used.

(Drying of laminate)

When a surface of the layer formed of the cellulose-based material is coated with a solution of a thermoplastic elastomer, it is preferable that the solvent of the solution of the thermoplastic elastomer is evaporated on the support to perform drying.
Examples of the method for evaporating the solvent on the support include: a method in which air is applied from the liquid level side of the solution of the thermoplastic elastomer; a method in which the back surface of the support is heated with a liquid as a medium; a method in which heat is transferred from the front and the back by radiant heat; and a method in which the solution is left standing in the air. These methods may be used in combination.
The method for evaporating the solvent on the support is preferably a method in which the solution is left standing in the air because smoothness of the sheet surface is easily obtained. It is more preferable to dry the solution in an atmosphere at 10 to 30°C.

[Production of sheet (press-adhering)]

A third method for producing the sheet of the present disclosure includes the steps of: superposing a layer formed of a cellulose-based material and a layer formed of a thermoplastic elastomer on each other; and thermally press-adhering the layer formed of the cellulose-based material and the layer formed of the thermoplastic elastomer.

(Layer formed of cellulose-based material)

The layer formed of the cellulose-based material can be obtained by a solvent-casting method in which a solution of the cellulose-based material is cast and dried; or a melt-casting method in which the cellulose-based material is heated, and a melt is cast and cooled. The layer may contain, in addition to the cellulose-based material, other additives such as a plasticizer if necessary.

(Layer formed of thermoplastic elastomer)

The layer formed of the thermoplastic elastomer can be obtained by a solvent casting method in which a solution of the thermoplastic elastomer is cast and dried, or a melt casting method in which the thermoplastic elastomer is heated, and a melt is cast and cooled.
The temperature range and the pressure range in thermal press-adhering of the layer formed of the cellulose-based material and the layer formed of the thermoplastic elastomer are, for example, as follows. As for the temperature range, the temperature is preferably 50°C or higher and 200°C or lower, more preferably 80°C or higher and 150°C or lower. As for the pressure range, the pressure is preferably 1 kg/cm$^2$ or more and 50 kg/cm$^2$ or less, more preferably 2 kg/cm$^2$ or more and 10 kg/cm$^2$ or more. The time for simultaneously applying heat and pressure is preferably 0.5 minutes or more and 30 minutes or less, and more preferably 1 minute or more and 10 minutes or less.

[Laminating of sheet]

The sheet of the present disclosure exhibits an excellent effect of having excellent transparency and exhibiting excellent adhesiveness when thermally press-adhered as described above, and the layer formed of the thermoplastic elastomer in the sheet can be laminated, by thermal press-adhering, to an adherend which is a counterpart material. The temperature range and the pressure range in thermal press-adhering of the sheet of the present disclosure and an adherend are, for example, as follows. As the temperature range, it is preferable to heat the sheet to a temperature equal to or higher than the glass transition temperature of the hard segment of the thermoplastic elastomer. The upper limit is, for example, 200°C or lower. As the pressure range, the pressure may be 1 kg/cm$^2$ or more and 50 kg/cm$^2$ or less, or 2 kg/cm$^2$ or more and 10 kg/cm$^2$ or less. The time for simultaneously applying heat and pressure is preferably 0.5 minutes or more and 30 minutes or less, and more preferably 1 minute or more and 10 minutes or less.
For example, for obtaining sufficient adhesiveness as a film to be used for a liquid crystal display, such as a protective film particularly for a polarizer, the adhesiveness of the sheet of the present disclosure to an adherend is preferably 0.01 N or more, more preferably 0.02 N or more, still more preferably 0.1 N or more, most preferably 0.5 N or more. A higher value of adhesiveness is more preferable, and the upper limit is not particularly limited. For example, when a sheet of cellulose acetate is used as an adherend, the adhesiveness may be 25 N or less. The adhesiveness is determined by performing measurement using a universal material testing machine "Tensilon RTF 1350" manufactured by A&D Company, Limited as described later.

It is considered that such excellent adhesiveness can be obtained due to the following action. The adhesiveness of the sheet of the present disclosure is obtained by virtue of an anchoring effect and a high level of electrostatic adhesiveness of the elastomer. When the sheet of the present disclosure is heated to a temperature equal to or higher than the glass transition temperature of the hard segment of the thermoplastic elastomer, and press-adhered to an adherend, the softened elastomer follows even the fine irregularities on a surface of the adherend, so that the sheet is adhered to the adherend without gaps. The hard segment is crystallized again by cooling, leading to fixation. It is considered that in this way, adhesiveness is obtained.

The sheet of the present disclosure can be used for food packaging materials; OHP sheets; clear files; optical films for flat panel displays; and the like, but it is desirable to use a laminate in which the sheet is adhered to another material. The other material is not particularly limited as long as it is a material to which the sheet of the present disclosure can be adhered, and examples thereof include resin films formed of polymers having high polarity, such as vinyl acetate, polyvinyl alcohol and PMMA (polymethyl methacrylate); resin films formed of cellulose-based materials, PET (polyethylene terephthalate), cycloolefin polymers and the like; and inorganic substances such as glass, concrete, aluminum, iron and stainless steel. In particular, an adhered product obtained by adhering a cellulose-based material to at least one side of polyvinyl alcohol colored with iodine is useful as a polarizing plate for liquid crystal displays. A film obtained by blending an ultraviolet absorber in a layer formed of a cellulose-based material; or glass adhered to a film obtained by applying a chiral liquid crystal layer to a layer formed of a cellulose-based material is useful as an ultraviolet absorbing sheet for a glass window, and a wavelength-selective reflection film.

The sheet of the present disclosure can exhibit excellent transparency and exhibit excellent adhesiveness when thermally press-adhered to a certain adherend, in particular, a resin film. Here, according to the step of further stacking a resin film on a surface of the layer formed of the thermoplastic elastomer in the sheet, and thermally press-adhering the film, it is possible to take advantage of the fact that the sheet of the present disclosure has excellent transparency and exhibits excellent adhesiveness when thermally press-adhered.

## Examples

Hereinafter, the present invention will be described in detail by way of examples, but the technical scope of the present invention is not limited to these examples.

Physical properties as described in examples and comparative examples below were evaluated by the following methods.

<Elastic modulus>

The elastic modulus can be determined by a method conforming to JIS K 7127. First, the obtained sheet was cut to a length of 150 mm and a width of 15 mm to obtain a sample. Each sample was left standing in an environment at 23°C and a relative humidity of 50% overnight, and then stretched at a chuck-to-chuck distance of 100 mm and a tensile speed of 20 mm/min using a universal material testing machine "Tensilon RTF 1350" manufactured by A&D Company, Limited, and the elastic modulus (GPa) was calculated from the initial slope.

<Adhesiveness>

The obtained sheet was cut to 3 cm × 17 cm to obtain a sample. This sample was superposed on a sheet of cellulose acetate cut to 3 cm × 17 cm, and pressed at 180°C and 2 MPa (about 20 kg/cm$^2$) for 10 minutes to obtain a laminated sheet. The laminated sheet was cut to a length of 150 mm and a width of 15 mm, each sample was left standing in an environment at 23°C and a relative humidity of 50% overnight, the film end was then peeled by 15 mm, the sample was vertically fixed at a chuck-to-chuck distance of 25 mm, and peeled at a speed of 300 mm/min, and the load at the time of peeling was measured. The average of loads at the central portion, except for the measured value at the beginning of the measurement where the load increased and the measured value at the end of the measurement where the load sharply decreased, was evaluated as adhesiveness (N). The average was evaluated as adhesiveness (N). In the test, the universal material tester was used as in the measurement of the elastic modulus.

<Light transmittance>

The transmittance of light having a wavelength of 380 to 780 nm was measured using UV-Visible Spectrophotometer UV 1700 manufactured by Shimadzu Corporation, and the average of transmittances at every 0.5 nm was defined as a light transmittance (%).

<Example 1>

(Preparation of solution of cellulose-based material)

100 parts by weight of cellulose acetate as a cellulose-based material, 180 parts by weight of methanol and 720 parts by weight of dichloromethane were added to a Duran bottle, and stirred at room temperature overnight to obtain a cellulose acetate solution.

(Preparation of solution of thermoplastic elastomer)

100 parts by weight of a styrene butadiene-based elastomer TR 2250 from JSR Corporation (thermoplastic elastomer A) as a thermoplastic elastomer, 180 parts by weight of methanol and 720 parts by weight of dichloromethane were added to a Duran bottle, and stirred at room temperature overnight to obtain a thermoplastic elastomer solution.

(Preparation of laminate)

A cellulose acetate solution having a degree of acetyl substitution of 2.85 was fed onto a glass plate, and cast by an applicator. The solution was left standing at room temperature and dried for 5 minutes, and the thermoplastic elastomer solution was stacked over the cellulose acetate solution on a glass plate by the applicator. The solution was left standing at room temperature and dried for 20 minutes, and the sheet was peeled off from the glass plate, and further dried at 80°C for 20 minutes to obtain a sheet. The results of evaluating the thickness of each layer, the elastic modulus, the adhesiveness and the light transmittance for each of the obtained sheets are shown in Table 1.

The thickness of the layer formed of the cellulose-based material is the thickness of the cellulose acetate sheet in which the thermoplastic elastomer is not stacked, and the thickness of the thermoplastic elastomer is calculated by subtracting from the total thickness of the laminate the thickness of the cellulose acetate sheet in which the thermoplastic elastomer is not stacked. The thickness of each of them was measured by a contact-type thickness meter. The same applies to the following examples and comparative examples.

Further, the weight of the glass plate with the cellulose acetate solution dried at room temperature for 5 minutes was measured, and the result showed that the concentration of the cellulose acetate at the time of stacking the thermoplastic elastomer solution was about 45% by weight.

<Example 2>

Except that as a thermoplastic elastomer, 50 parts by weight of the thermoplastic elastomer A was used instead of 100 parts by weight of the thermoplastic elastomer A, the same procedure as in Example 1 was carried out to obtain a sheet, and each property was evaluated. The results of evaluating the thickness of each layer, the elastic modulus, the adhesiveness and the light transmittance for each of the obtained sheets are shown in Table 1.

<Example 3>

Except that as a thermoplastic elastomer, a nylon 12-based elastomer E40-S4 from Daicel-Evonik Ltd. (thermoplastic elastomer B) was used instead of the thermoplastic elastomer A, the same procedure as in Example 1 was carried out to obtain a sheet, and each property was evaluated. The results of evaluating the thickness of each layer, the elastic modulus, the adhesiveness and the light transmittance for each of the obtained sheets are shown in Table 1.

<Example 4>

(Preparation of solution of thermoplastic elastomer)

As a thermoplastic elastomer, 150 parts by weight of a urethane-based elastomer T1180 from DIC Covestro Polymer Ltd. (thermoplastic elastomer C) and 850 parts by weight of tetrahydrofuran were added, and the mixture was stirred at 60°C overnight to obtain a thermoplastic elastomer solution.

11

(Preparation of laminate)

The cellulose acetate sheet was fixed on a glass plate, and the thermoplastic elastomer solution was stacked by an applicator. The solution was left standing at room temperature and dried for 30 seconds, and the sheet was peeled off from the glass plate, and further dried at 100°C for 10 minutes to obtain a sheet. The results of evaluating the thickness of each layer, the elastic modulus, the adhesiveness and the light transmittance for each of the obtained sheets are shown in Table 1.

<Example 5>

(Preparation of solution of thermoplastic elastomer)

Except that as a thermoplastic elastomer, a urethane-based elastomer NY 585 from BASF Japan Ltd. (thermoplastic elastomer D) was used instead of the thermoplastic elastomer C, the same procedure as in Example 4 was carried out to obtain a thermoplastic elastomer solution.

(Preparation of laminate)

Further, the same procedure as in Example 4 was carried out to obtain a sheet. The results of evaluating the thickness of each layer, the elastic modulus, the adhesiveness and the light transmittance for each of the obtained sheets are shown in Table 1.

<Example 6>

(Preparation of solution of thermoplastic elastomer)

As a thermoplastic elastomer, a thermoplastic elastomer D was charged added into an extruder, heated and melted at 200°C, extruded from a T-die onto a cellulose acetate sheet to obtain a laminate, and the laminate was sandwiched between metal cast rolls, and continuously taken up at a speed of 10 m/min while being cooled. In this way, a sheet was obtained, and each property was evaluated. The results of evaluating the thickness of each layer, the elastic modulus, the adhesiveness and the light transmittance for each of the obtained sheets are shown in Table 1.

<Example 7>

As a thermoplastic elastomer, a thermoplastic elastomer D was charged added into an extruder, heated and melted at 200°C, extruded from a T-die onto a cellulose acetate sheet to obtain a laminate, a cellulose acetate sheet was further stacked on the other surface of the elastomer, and the laminate was sandwiched between metal cast rolls, and continuously taken up at a speed of 10 m/min while being cooled. In this way, a sheet was obtained.

<Comparative Example 1>

(Preparation of solution of cellulose-based material)

100 parts by weight of cellulose acetate as a cellulose-based material, 180 parts by weight of methanol and 720 parts by weight of dichloromethane were added to a Duran bottle, and stirred at room temperature overnight to obtain a cellulose acetate solution.

(Preparation of cellulose acetate sheet)

A cellulose acetate solution having a degree of acetyl substitution of 2.85 was fed onto a glass plate, and cast by an applicator. The solution was left standing at room temperature and dried for 20 minutes, and the sheet was peeled off from the glass plate, and further dried at 80°C for 20 minutes to obtain a cellulose acetate sheet. The results of evaluating the thickness of each layer, the elastic modulus, the adhesiveness and the light transmittance for each of the obtained sheets are shown in Table 1.

[Table 1]

| | Cellulose-based material | | Thermoplastic elastomer | | Elastic modulus (GPa) | Adhesiveness (N) | Light transmittance (%) |
|---|---|---|---|---|---|---|---|
| | Type | Thickness (μm) | Type | Thickness (μm) | | | |
| Example 1 | Cellulose acetate | 80 | A | 30 | 2.9 | 0.5 | 90 |
| Example 2 | Cellulose acetate | 80 | A | 15 | 3.4 | 0.5 | 91 |
| Example 3 | Cellulose acetate | 80 | B | 30 | 3.1 | 0.8 | 91 |
| Example 4 | Cellulose acetate | 80 | C | 30 | 3.0 | 0.9 | 91 |
| Example 5 | Cellulose acetate | 80 | D | 30 | 3.1 | 1.0 | 91 |
| Example 6 | Cellulose acetate | 80 | D | 30 | 3.1 | 1.0 | 91 |
| Comparative Example 1 | Cellulose acetate | 80 | None | 0 | 3.8 | None | 92 |

As shown in Table 1, the sheets of Examples 1 to 6 have a light transmittance of 90% or more, so that a sufficient amount of transmitted light can be secured in a liquid crystal display, and the sheets of Examples 1 to 6 exhibits an adhesiveness of 0.5 N or more when thermally press-adhered, so that for example, assembly of a liquid crystal display can be sufficiently endured as a protective film for a polarizer or the like.

## Claims

1. A sheet comprising a laminate including a layer formed of a cellulose-based material and a layer formed of a thermoplastic elastomer, wherein

    each of molecules forming the thermoplastic elastomer has both a rubber component having entropy elasticity and a molecule-constraining component for preventing plastic deformation,
    the cellulose-based material is selected from the group consisting of cellulose, cellulose esters and cellulose ethers,
    the thermoplastic elastomer is a urethane-based elastomer or an amide-based elastomer, and
    wherein the light transmittance of the sheet is 85% or more as determined with a transmittance of light having a wavelength of 380 to 780 nm measured using a UV-visible spectrophotometer, and defining the average of transmittances at every 0.5 nm as the light transmittance (%).

2. The sheet according to claim 1, comprising a laminate of two layers, one of which is the layer formed of the cellulose-based material and the other of which is the layer formed of the thermoplastic elastomer.

3. The sheet according to claim 1 or 2, wherein the cellulose-based material contains at least one selected from the group consisting of cellulose acetate, cellulose acetate propionate, cellulose acetate butyrate, methyl cellulose, ethyl cellulose and hydroxyethyl cellulose.

4. A method for producing the sheet set forth in any one of claims 1 to 3, the method comprising the steps of:

    casting a solution of a cellulose-based material;
    drying the cast cellulose-based material; and
    casting a solution of a thermoplastic elastomer onto the cast cellulose-based material after the drying.

**5.** A method for producing the sheet set forth in any one of claims 1 to 3, the method comprising the steps of:

obtaining a layer formed of a cellulose-based material by a solvent-casting method in which a solution of the cellulose-based material is cast and dried; or by a melt-casting method in which the cellulose-based material is heated, and a melt is cast and cooled; and

coating a surface of the layer formed of a cellulose-based material with a melt or a solution of a thermoplastic elastomer.

**6.** A method for producing the sheet set forth in any one of claims 1 to 3, the method comprising the steps of:

obtaining a layer formed of a cellulose-based material by a solvent-casting method in which a solution of the cellulose-based material is cast and dried; or by a melt-casting method in which the cellulose-based material is heated, and a melt is cast and cooled;

superposing the layer formed of a cellulose-based material and a layer formed of a thermoplastic elastomer on each other; and

thermally press-adhering the layer formed of the cellulose-based material and the layer formed of the thermoplastic elastomer.

**7.** A method for producing a sheet, the method comprising the step of further stacking a resin film on a surface of the layer formed of the thermoplastic elastomer in the sheet set forth in any one of claims 1 to 3, and thermally press-adhering the film.

**8.** A method for laminating the sheet set forth in any one of claims 1 to 3, comprising thermally press-adhering a surface of the layer formed of the thermoplastic elastomer to an adherend.

**9.** The sheet according to claim 2, wherein

another layer of the cellulose-based material is further stacked on the layer formed of the thermoplastic elastomer in the laminate of the two layers, and

the cellulose-based material is cellulose acetate.


**Patentansprüche**

**1.** Folie, umfassend ein Laminat, das eine aus einem Material auf Cellulosebasis gebildete Schicht und eine aus einem thermoplastischen Elastomer gebildete Schicht einschließt, wobei

jedes der das thermoplastische Elastomer bildenden Moleküle sowohl eine Kautschukkomponente mit Entropieelastizität als auch eine Molekül-einschränkende Komponente zum Verhindern von plastischer Verformung aufweist,

das Material auf Cellulosebasisaus der Gruppe ausgewählt ist, bestehend aus Cellulose, Celluloseestern und Celluloseethern,

es sich bei dem thermoplastischen Elastomer um ein Elastomer auf Urethanbasis oder ein Elastomer auf Amidbasis handelt und

wobei die Lichtdurchlässigkeit der Folie 85 % oder mehr beträgt, bestimmt mit einer Durchlässigkeit von Licht mit einer Wellenlänge von 380 bis 780 nm, gemessen unter Verwendung eines UV/Vis-Spektrophotometers und Definierung des Durchschnitts der Durchlässigkeiten alle 0,5 nm als Lichtdurchlässigkeit (%).

**2.** Folie gemäß Anspruch 1, umfassend ein Laminat aus zwei Schichten, von denen es sich bei einer um die aus dem Material auf Cellulosebasis gebildete Schicht und bei der anderen um die aus dem thermoplastischen Elastomer gebildete Schicht handelt.

**3.** Folie gemäß Anspruch 1 oder 2, wobei das Material auf Cellulosebasis mindestens eines enthält, ausgewählt aus der Gruppe, bestehend aus Celluloseacetat, Celluloseacetatpropionat, Celluloseacetatbutyrat, Methylcellulose, Ethylcellulose und Hydroxyethylcellulose.

**4.** Verfahren zum Herstellen der in einem der Ansprüche 1 bis 3 dargelegten Folie, wobei das Verfahren die Schritte umfasst:

Gießen einer Lösung eines Materials auf Cellulosebasis;

Trocknen des gegossenen Materials auf Cellulosebasis und

Gießen einer Lösung eines thermoplastischen Elastomers auf das gegossene Material auf Cellulosebasis nach dem Trocknen.

5. Verfahren zum Herstellen der in einem der Ansprüche 1 bis 3 dargelegten Folie, wobei das Verfahren die Schritte umfasst:

Gewinnen einer aus einem Material auf Cellulosebasis gebildeten Schicht durch ein Lösungsmittelgießverfahren, bei dem eine Lösung des Materials auf Cellulosebasis gegossen und getrocknet wird; oder durch ein Schmelzgießverfahren, bei dem das Material auf Cellulosebasis erhitzt wird und eine Schmelze gegossen und abgekühlt wird; und

Beschichten einer Oberfläche der aus einem Material auf Cellulosebasis gebildeten Schicht mit einer Schmelze oder einer Lösung eines thermoplastischen Elastomers.

6. Verfahren zum Herstellen der in einem der Ansprüche 1 bis 3 dargelegten Folie, wobei das Verfahren die Schritte umfasst:

Gewinnen einer aus einem Material auf Cellulosebasis gebildeten Schicht durch ein Lösungsmittelgießverfahren, bei dem eine Lösung des Materials auf Cellulosebasis gegossen und getrocknet wird; oder durch ein Schmelzgießverfahren, bei dem das Material auf Cellulosebasis erhitzt wird und eine Schmelze gegossen und abgekühlt wird;

Überlagern der aus einem Material auf Cellulosebasis gebildeten Schicht und einer aus einem thermoplastischen Elastomer gebildeten Schicht übereinander; und

thermisches Presskleben der aus dem Material auf Cellulosebasis gebildeten Schicht und der aus dem thermoplastischen Elastomer gebildeten Schicht.

7. Verfahren zum Herstellen einer Folie, wobei das Verfahren den Schritt umfasst, bestehend im weiteren Stapeln eines Harzfilms auf eine Oberfläche der aus dem thermoplastischen Elastomer gebildeten Schicht in der in einem der Ansprüche 1 bis 3 dargelegten Folie, und thermischen Presskleben des Films.

8. Verfahren zum Laminieren der in einem der Ansprüche 1 bis 3 dargelegten Folie, umfassend thermisches Presskleben einer Oberfläche der aus dem thermoplastischen Elastomer gebildeten Schicht an eine Klebefläche.

9. Folie gemäß Anspruch 2, wobei

noch eine Schicht des Materials auf Cellulosebasis weiter auf die Schicht gestapelt ist, die in dem Laminat der zwei Schichten aus dem thermoplastischen Elastomer gebildet ist, und

es sich bei dem Material auf Cellulosebasis um Celluloseacetat handelt.

**Revendications**

1. Feuille comprenant un stratifié comportant une couche formée d'un matériau à base de cellulose et une couche formée d'un élastomère thermoplastique, dans laquelle

chacune des molécules formant l'élastomère thermoplastique a à la fois un composant de caoutchouc ayant une élasticité entropique et un composant de contrainte moléculaire pour empêcher une déformation plastique, le matériau à base de cellulose est choisi dans le groupe constitué par la cellulose, les esters de cellulose et les éthers de cellulose,

l'élastomère thermoplastique est un élastomère à base d'uréthane ou un élastomère à base d'amide, et dans laquelle le facteur de transmission de lumière de la feuille est supérieur ou égal à 85% tel que déterminé avec un facteur de transmission de lumière ayant une longueur d'onde comprise entre 380 et 780 nm mesurée en utilisant un spectrophotomètre UV-visible, et définissant la moyenne des facteurs de transmission tous les 0,5 nm comme étant le facteur de transmission de lumière (%).

2. Feuille selon la revendication 1, comprenant un stratifié de deux couches dont l'une est la couche formée du matériau à base de cellulose et l'autre est la couche formée de l'élastomère thermoplastique.

3. Feuille selon la revendication 1 ou 2, dans laquelle le matériau à base de cellulose contient au moins un élément choisi dans le groupe constitué par l'acétate de cellulose, l'acétopropionate de cellulose, l'acétobutyrate de cellulose, la méthylcellulose, l'éthylcellulose et l'hydroxyéthylcellulose.

4. Procédé de production de la feuille selon l'une quelconque des revendications 1 à 3, le procédé comprenant les étapes consistant à :

  couler une solution d'un matériau à base de cellulose ;
  sécher le matériau coulé à base de cellulose ; et
  couler une solution d'un élastomère thermoplastique sur le matériau coulé à base de cellulose après le séchage.

5. Procédé de production de la feuille selon l'une quelconque des revendications 1 à 3, le procédé comprenant les étapes consistant à :

  obtenir une couche formée d'un matériau à base de cellulose par un procédé de coulage par solvant dans lequel une solution du matériau à base de cellulose est coulée et séchée ; ou par un procédé de coulage par fusion dans lequel le matériau à base de cellulose est chauffé, et une masse fondue est coulée et refroidie ; et revêtir une surface de la couche formée d'un matériau à base de cellulose avec une masse fondue ou une solution d'un élastomère thermoplastique.

6. Procédé de production de la feuille selon l'une quelconque des revendications 1 à 3, le procédé comprenant les étapes consistant à :

  obtenir une couche formée d'un matériau à base de cellulose par un procédé de coulage par solvant dans lequel une solution du matériau à base de cellulose est coulée et séchée ; ou par un procédé de coulage par fusion dans lequel le matériau à base de cellulose est chauffé, et une masse fondue est coulée et refroidie ; superposer la couche formée d'un matériau à base de cellulose et une couche formée d'un élastomère thermoplastique l'une sur l'autre ; et
  faire adhérer thermiquement par pression la couche formée du matériau à base de cellulose et la couche formée de l'élastomère thermoplastique.

7. Procédé de production d'une feuille, le procédé comprenant l'étape consistant à empiler en outre un film de résine sur une surface de la couche formée de l'élastomère thermoplastique dans la feuille selon l'une quelconque des revendications 1 à 3, et à faire adhérer thermiquement par pression le film.

8. Procédé de stratification de la feuille selon l'une quelconque des revendications 1 à 3, comprenant l'adhésion thermique par pression d'une surface de la couche formée de l'élastomère thermoplastique sur une partie adhérée.

9. Feuille selon la revendication 2, dans laquelle

  une autre couche du matériau à base de cellulose est en outre empilée sur la couche formée de l'élastomère thermoplastique dans le stratifié des deux couches, et
  le matériau à base de cellulose est de l'acétate de cellulose.

**EP 3 623 151 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004109657 A
- JP 2002082226 A
- JP 2016173581 A
- JP 2016048361 A
- US 2014170359 A1